# EUROPEAN PATENT APPLICATION

(11) **EP 2 611 228 A1**
(43) Date of publication of application: **03.07.2013**
(21) Application number: 11306788.8
(22) Date of filing: 27.12.2011
(51) Int. Cl.: H04W 12/08, H04W 8/20, H04W 88/18

(54) **Allowing access to services delivered by a service delivery platform in a 3GPP HPLM, to an user equipment connected over a trusted non-3GPP access network**

(71) Applicant: Alcatel Lucent, 75007 Paris (FR)
(72) Inventor: Thiebaut, Laurent, 91620 NOZAY (FR); Livanos, Konstantin, NAPERVILLE, IL Illinois 60563-1594 (US)
(74) Representative: El Manouni, Josiane

(57) **Abstract**

Embodiments of the present invention include a method for allowing access to services delivered by a service delivery platform in a 3GPP HPLMN, to an User Equipment UE connected over a trusted non-3GPP Access Network AN, said method comprising:
■ allowing delivery of said services to said UE not involving a mobile Edge Router of a PLMN but using a HPLMN service proxy between said trusted non-3GPP AN and said service delivery platform,
■ an entity of said non-3GPP AN signalling user identification information to said HPLMN service proxy.

## Description

The present invention generally relates to communication networks and systems, and to Fixed Mobile Convergence (FMC) between fixed and mobile communication networks and systems.

Detailed descriptions of mobile communication networks and systems can be found in the literature, in particular in Technical Specifications published by standardization bodies such as in particular 3GPP (3^{rd} Generation Partnership Project).

In a mobile system, a terminal (also called User Equipment UE) has access to mobile services via a mobile network (also called Public Land Mobile Network PLMN). In particular, a terminal has access to mobile IP-based services via an IP-Connectivity Access Network IP-CAN.

An example of mobile system is Evolved Packet System EPS, specified in particular in 3GPP TS 23.401 and 3GPP TS 23.402. EPS includes Evolved Packet Core EPC that provides IP connectivity and that can be accessed by different types of Access Networks, including 3GPP Radio Access Networks (such as E-UTRAN or GERAN/UTRAN) and non-3GPP IP Access Networks (such as WLAN, WiMAX, ...etc). Non-3GPP access to EPC is more particularly specified in 3GPP TS 23.402. Non-Seamless WLAN Offload (NSWO), wherein the UE acquires an IP address on WLAN access and specific IP flows are routed via the WLAN access without traversing the EPC, is also specified in 3GPP TS 23.402.

Detailed descriptions of fixed communication networks and systems can be found in the literature, in particular in Technical Specifications published by standardization bodies such as Broadband Forum BBF.

An example of fixed system is a system including a BBF Access Network (specified in particular in BBF TR-058, BBF TR-1 01, WT-134) accessed by a Customer premises Network such as a WLAN network.

In the frame of FMC, interworking between 3GPP and BBF is being studied at 3GPP especially for mobile terminals (UE) connected over a BBF access:
■ Interworking architectures wherein EPC is accessed by and UE over a BBF Access Network, are being considered

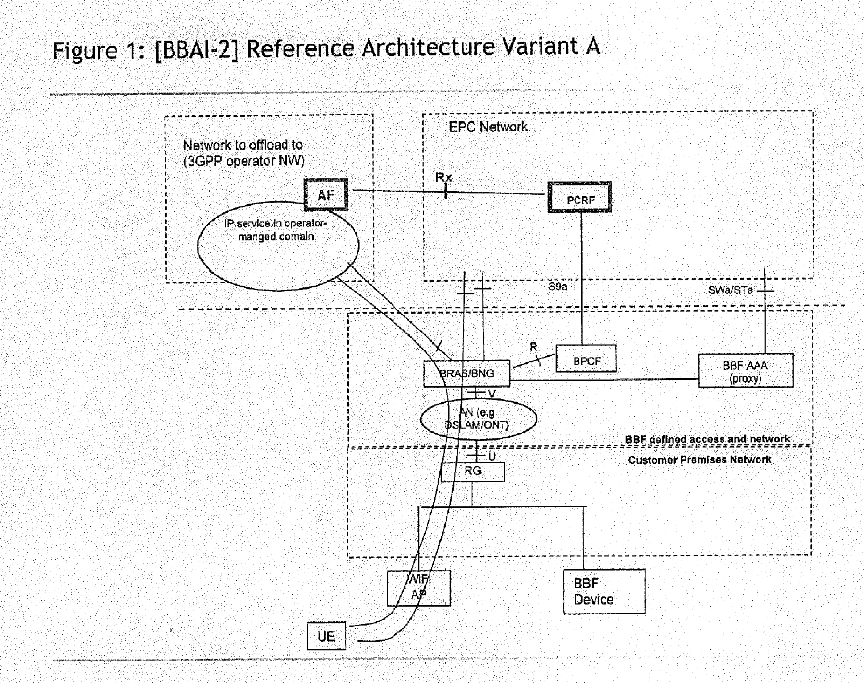

○ In 3GPP TR 23.839 (BBAI Building Block 1) where the traffic from the UE is routed to the EPC using a Virtual Private Network over the BBF access (this corresponds to the usage of HNB/HeNB or to the usage of the S2b/S2c solutions described in sections 7 and 15 of 3GPP TS 23.403) and
○ In 3GPP TR 23.852 (SAMOG) where the traffic from the UE is routed to the EPC without using a Virtual Private Network over a WLAN access when this WLAN access can be considered as trusted.
■ An NSWO (Non Seamless WLAN offload) interworking architecture, wherein the UE acquires an IP address on the BBF access and specific IP flows are routed via the BBF access to the HPLMN service platforms without traversing the EPC, is also considered in 3GPP TR 23.839; such architecture is recalled in figure 1 taken from 3GPP TR 23.839.

As recognized by the inventors and as will be explained with more detail later in the description, there is a need to allow access to 3GPP Home PLMN (HPLMN) services, by an UE connected over a trusted non-3GPP IP Access Network (or non-3GPP IP Access Network considered as trusted by the 3GPP HPLMN operator), in an architecture such as for example the NSWO architecture recalled in figure 1, in particular when such services are delivered via a HPLMN service proxy such as for example a Wireless Access Protocol WAP Gateway (such as specified in particular in Technical Specifications published by Open Mobile Alliance OMA). More generally there is a need to improve access to mobile services in such systems, and/or to improve Fixed Mobile Convergence.

Embodiments of the present invention in particular address such needs.

These and other objects are achieved, in one aspect, by a method for allowing access to services delivered by a service delivery platform in a 3GPP HPLMN, to an User Equipment UE connected over a trusted non-3GPP Access Network AN.

In an embodiment, said method comprises:
■ allowing delivery of said services to said UE not involving a mobile Edge Router of a PLMN but using a HPLMN service proxy between said trusted non-3GPP AN and said service delivery platform,
■ an entity of said non-3GPP AN signalling user identification information to said HPLMN service proxy.

These and other objects are achieved, in other aspects, by entities for performing such method, said entities including, in particular, HPLMN service proxy, 3GPP AAA server, and entities of non-3GPP Access Network (such as in particular Broadband Network Gateway BNG of a BBF Access Network).

Some embodiments of apparatus and/or methods in accordance with embodiments of the present invention are now described, by way of example only, and with reference to the accompanying drawings, in which:
- Figure 1 is intended to recall an example of Non- Seamless WLAN Offload architecture,
- Figure 2 is intended to illustrate an example of network layout when an UE accesses to PLMN services over a 3GPP access,
- Figure 3 is intended to illustrate an example of procedures and/or messages and/or information flows when an UE accesses to PLMN services over a trusted WLAN & BBF access, according to an embodiment of the present invention,
- Figure 4 is intended to illustrate an example of network layout when an UE accesses to PLMN services over a trusted WLAN & BBF access, according to an embodiment of the present invention.

Various embodiments of the present invention will be described hereinafter.

In case of offload of the traffic of a 3gpp UE (User Equipment) with WLAN (such as defined by IEEE 802.11) capabilities via a non 3gpp access, it is interesting to allow this 3gpp UE to "natively" access to the service of its mobile operator (HPLMN) over this non 3gpp access when the HPLMN of the UE trusts the provider of the non 3gpp access. A "Native" access to the HPLMN services means that the IP flows between the UE and the HPLMN service platform do not need to go via the EPC (do not need to go via a PGW/GGSN). Such a non 3gpp access may correspond to a Fixed line (e.g. DSL, PON) as specified by the BBF (BroadBand Forum) but may also correspond to other deployment cases such as a WLAN hot spot deployed by a mobile operator. In this case, a native access to HPLMN services avoids including both a PGW/GGSN and a BNG (Broadband Network gateway such as defined by the BBF) to access those HPLMN services when the UE is served by a trusted non 3gpp access.

The case of a non 3gpp access relying on a BBF line is being studied in 3gpp as part of the "BBAI" Building Block 2 ("BBAI-2") activities for the so-called "case A". This use case is documented in 3gpp TR 23.839. Figure 1 presents the network architecture for this case such as discussed between 3gpp and BBF (Document 3BF-11010)

As a practical use case, this may correspond to an user accessing
■ to the MMS (Multimedia Messaging Service such as defined in 3gpp 23.140) or
■ to the video streaming services (such as defined in 3gpp 26.247) of its mobile operator, using an UE connected over WLAN to the residential line of the user (e.g. the user is at Home and is accessing to MMS/streaming services of his/her HPLMN over a WLAN Access Point connected to a DSL line)

One issue is that some HPLMN services require the service platform to receive information on the relationship between the User identity (e.g. IMSI, MSISDN) and the IP address of the UE used by this user. This kind of information is e.g. used by an intermediate service (e.g. HTTP Hyper Text Transfer Protocol, such as defined in IETF RFC 2616) proxy deployed in the path between the UE and the HPLMN server (e.g. MMS Service Center, video streaming server,...) serving the UE.

An example of such service (HTTP) Proxy is a WAP GW (Wireless Application Protocol Gateway) such as defined in OMA standards).

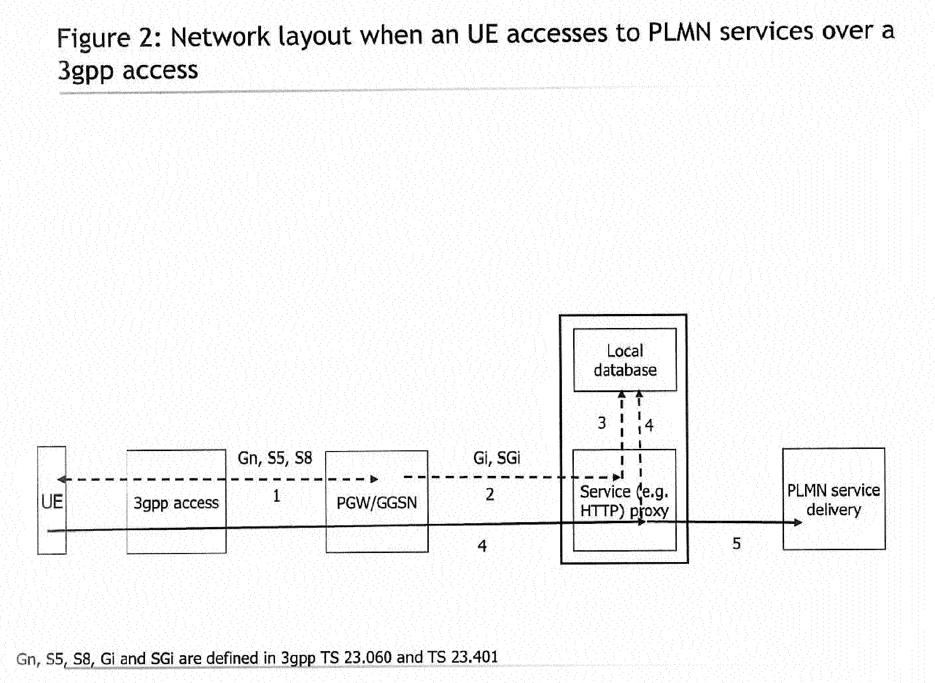

When the U E accesses to its operator services over a 3gpp access (as illustrated by way of example in figure 2), following sequence of events takes place:
1. When it allocates an IP address / IPv6 Prefix to an UE upon PDP context /PDN connection activation,
2. the PGW/GGSN notifies the service (e.g. HTTP) Proxy (e.g. WAP GW) with the association between the user identity (such as the IMSI, MSISDN, ..of the user) with the (APN, IP address / IPv6 Prefix allocated to the UE) via a Radius/Diameter Accounting message defined in 3gpp 29.061 §16.
3. The service (e.g. HTTP) proxy stores this association in a mapping table
4. When it receives service (e.g. HTTP) traffic from an UE the service (e.g. HTTP) Proxy gets the IP @ of the UE (in the IP packet received from the UE), looks up its mapping table and adds a new (e.g. HTTP) header that contains the identity (e.g. MSISDN) of the user
5. The service (e.g. HTTP) Proxy forwards the request with the new (e.g. HTTP) header that contains the identity (e.g. MSISDN) of the user. The recipient of the service (e.g. HTTP) request (e.g. the MMS or streaming server serving the UE) knows which user is associated with the request.

The PGW/GGSN furthermore enforces source IP address validation to ensure that an UE does not try to impersonate another UE by using another IP address / IPv6 Prefix than the one that the PGW/GGSN has allocated to this UE. Furthermore IP routing enforces that only traffic from PGW/GGSN is sent onto the UE side of the service (e.g. HTTP) proxy.

When an UE wants to access to its HPLMN services over non 3gpp access, current solutions involve:

### Existing Solution 1) : set up a VPN between the UE and a PLMN entity

Even though the UE is using a secured non 3gpp radio (secured WLAN e.g. leveraging the strong security brought by the release 2007 of 802.11 specifications of IEEE), the UE has to establish some VPN (Virtual Private Network) to its HPLMN:
■ The UE is authenticated by a 3gpp entity when setting up the VPN
■ The VPN guarantees packets received by the service platform of the HPLMN have not been forged or altered by a Third party

There are 2 main ways to set up such VPN
■ A 3gpp VPN established at IP layer. In this case the UE is served by a PGW/GGSN that can generate the same Radius accounting than in case the UE is using a 3gpp radio access (e.g. GSM, UMTS, LTE). The 3gpp VPN may correspond to

○ an IPSec/IKE (Internet Key Exchange such as defined in ITEF RFC 5996) tunnel established between the UE and an ePDG such as described in 3gpp 23.402 for the "Un-trusted Non-3GPP IP Access to EPC" also called "S2b" deployment case. It relies on IKEv2 specifications modified by 3gpp TS 24.302
○ a DSMIPv6 tunnel (itself relying over IPSec/IKE) between the UE and the DSMIPv6 Home Agent function of a PGW such as described in 3gpp 23.402 for the "Host Based Mobility" also called "S2c" deployment case. It relies on IKEv2 specifications modified by 3gpp TS 24.303

■ Have a TLS link directly between the UE and the service platform of the operator

The solution with a 3gpp VPN at IP layer
■ Requires the 3gpp UE to implement a VPN layer that is dedicated to 3gpp
■ Requires the network to deploy costly IPSec terminations

The solution with a 3gpp VPN at application layer requires each application to take care of the security with the UE which is cumbersome

### Existing Solution 2) : use a Trusted Access to EPC

3gpp is defining (SAMOG, refer to 3gpp TR 23.852) a trusted WLAN access to EPC (Evolved Packet Core) where an UE may access to the services of the HPLMN over the concatenation of
■ A Trusted WLAN supporting the relevant IEEE 802.11 security (and often including a BNG Broadband Network Gateway- as defined in BBF)
■ A PGW/GGSN (as defined in 3gpp 23.401)
■ An S2a interface between the Trusted WLAN and the PGW, that may be made up of

○ GTP (GPRS Tunnelling Protocol) as specified in TS 3gpp 29.274 [90] for the control plane and in 3gpp TS 29.281 for the user plane.
○ PMIP as defined in 3gpp TS 29.275

■ With the PGW having the capability to notify the service (e.g. HTTP) Proxy (e.g. WAP GW) with the association between the user identity (such as the IMSI, MSISDN, of the user) with the (APN, IP address / IPv6 Prefix allocated to the UE) via a Radius/Diameter Accounting message defined in 3gpp TS 29.061 §16.

This solution 2)
■ Allows the PLMN to manage the IP flows of the user exactly as if they were sent over a 3gpp access, e.g. to provide flow based charging.
■ provides the HPLMN service (e.g. HTTP) Proxy with the association between an IP address and an user identity as in the case of the access to HPLMN services over 3GPP.

As recognized by the inventors: it nevertheless implies the usage of a PGW on top of a BNG. In cases where the Flow based charging capabilities of a PGW are not needed, a lighter (and cheaper) solution is recommended that would avoid usage of 2 IP Edge routers in a row (BNG + PGW)

As recognized by the inventors: In cases where a PGW is not needed for the IP services of a 3GPP UE that is currently served by a trusted non 3GPP access, a more direct traffic offload path is desirable where a PGW/GGSN is not used / needed.
■ In this case, it is interesting to allow this 3gpp UE to access to the service of its mobile operator (HPLMN) over this non 3gpp access when the HPLMN of the UE trusts the provider of the non 3gpp access.

As recognized by the inventors, in case of traffic offload via a trusted non 3gpp access (such as a BBF access) no possibility is yet defined to
■ Signal from the non 3gpp access to an HPLMN service proxy (such as a WAP GW) the association between an IP address / IPv6 prefix it has allocated to an UE and the identity of this UE (IMSI, MSISDN or any service level identifier of the UE such as the External UE identifier being defined for Machine Type Communications)

○ Note that the service proxy may act also as a security proxy to filter out traffic coming from terminals not allowed to access to the service platforms of the HPLMN

■ control the forwarding of some service (e.g. HTTP) flows of the UE via the service (e.g. HTTP) Proxy (e.g. WAP GW) of the HPLMN

○ This forwarding may e.g. use a tunnel from the non 3gpp access to the HPLMN

Embodiments of the present invention in particular enable to avoid such drawbacks and/or to address such needs.

Various embodiments of the present invention include:
■ the trusted non 3gpp access issues AAA signalling (such as Radius accounting per 3gpp 29.061) containing user identification information associated with IP addressing information towards the service (HTTP) proxy of the HPLMN when this non 3gpp access has allocated an IP address / IPv6 prefix to an UE authenticated as belonging to a 3gpp user of this HPLMN.

○ the user identification information corresponds to the HPLMN identity of the UE (such as the IMSI and/or MSISDN of the UE or any service level identifier of the UE such as the External UE identifier being defined for Machine Type Communications)
○ the IP addressing information corresponds e.g. to the IP address / IPv6 prefix allocated by the trusted non 3gpp access to this UE

■ In order for the trusted non 3gpp access to be able to generate proper user identification information in AAA (e.g. Radius accounting) signalling towards the service (HTTP) proxy of the HPLMN, the necessary information is provided to the non 3gpp access as part of the authorization data sent once a 3gpp UE has been successfully authenticated over this non 3gpp access. The information provided to the non 3gpp access corresponds at least to the UE identifiers (such as the IMSI and the MSISDN) but may also contain Addressing information about where to send the AAA (e.g. Radius accounting) signalling (towards the service (HTTP) proxy in the HPLMN) as well as information allowing the non 3gpp access to properly forward the IP traffic of the UE targeting the service platforms of the HPLMN.
■ The decision whether a non 3gpp can be considered by the HPLMN as trusted may take into account whether the non 3gpp access has indicated it supports sending AAA notification from the non 3gpp access when this non 3gpp access has allocated / de-allocated an IP address / IPv6 prefix to the UE.

More detailed embodiments are described hereinafter.

The following describes the case where a 3gpp UE is trying to access to its HPLMN services over a Trusted WLAN access connected via a BBF line as part of Non Seamless WLAN offload (NSWO)

NSWO means that the UE neither establishes itself nor requests the non 3gpp access to establish any tunnel / connection to a PGW/GGSN in order to access to its HPLMN services.

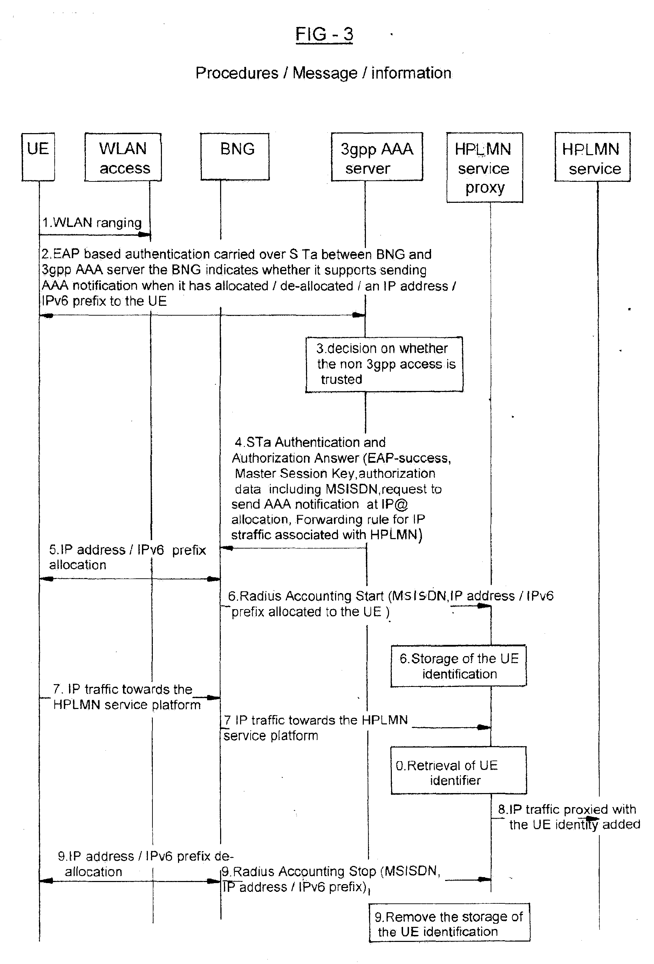

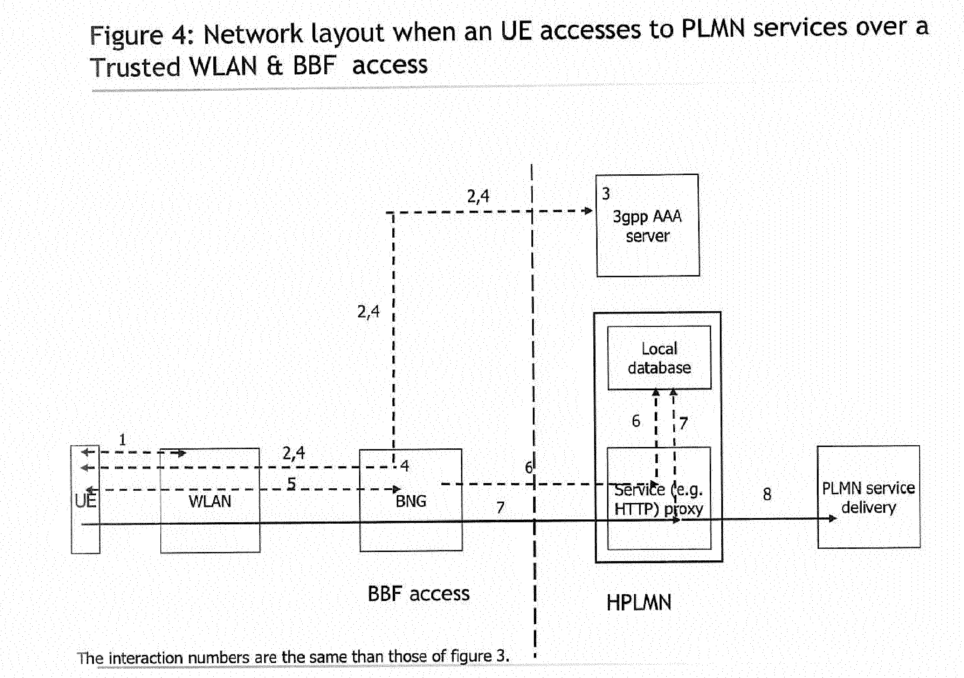

In this example the First hop router of the UE (the entity that allocates IP addresses / IPv6 prefixes to the UE) is assumed to be a BNG (Broadband Network gateway such as defined by the BBF). The case where the RGW (Residential Gateway) or a WLAN AP (Access Point) or AC (Access concentrator) allocates the IP addresses / IPv6 prefixes to the UE is detailed later on. Refer also to figure 3 and figure 4.

Various embodiments are described in following steps:
1. The UE requests a WLAN access. This includes WLAN ranging.
2. The UE is authenticated. USIM based authentication (e.g. EAP-SIM, EAP-AKA, EAP-AKA') is run between the (Trusted) non 3gpp access (acting as the authenticator) and a 3gpp AAA server. During the AAA exchange associated with the UE authentication the non 3gpp access indicates whether it supports sending AAA notification from the non 3gpp access when this non 3gpp access has allocated / de-allocated an IP address / IPv6 prefix to the UE.
3. When the authentication is successful, the 3gpp server takes a decision on whether the non 3gpp access can be trusted. This decision may take into account whether the non 3gpp access has indicated it supports sending AAA notification from the non 3gpp access when this non 3gpp access has allocated / de-allocated an IP address / IPv6 prefix to the UE.
4. Assuming the non 3gpp access is trusted the 3gpp AAA server creates a AAA Authentication and Authorization result (e.g. per 3gpp 29.273 specifications for the STa reference point) and adds to this message following information aiming at allowing the UE access to the service platforms of the HPLMN:
   ■ the UE identifiers (such as the IMSI and the MSISDN or any service level identifier of the UE such as the External UE identifier being defined for Machine Type Communications)
   ■ An indication of whether the HPLMN requests AAA notification from the non 3gpp access when this non 3gpp access has allocated / de-allocated an IP address / IPv6 prefix to the UE
   ■ Addressing information about where to send the AAA notification signalling (e.g. towards the service (HTTP) proxy in the HPLMN): the domain name of where to send this AAA notification signalling.
   ■ The virtual APN for the trusted non 3gpp access to associate with the Non seamless WLAN Offload service
   ■ Information allowing the non 3gpp access to properly forward the IP traffic of the UE targeting the service platforms of the HPLMN. This may correspond to a VRF index referring to

   ○ filtering rules allowing the non 3gpp access to identify traffic targeting the service platform of the PLMN.
   ○ Forwarding information (e.g. tunnel protocol such as VLAN or IP in IP or GRE) and possibly tunnel address allowing the non 3gpp access to properly forward traffic targeting the service platform of the PLMN The non 3gpp access (BNG) stores the authorization information
5. (later on) The non 3gpp access allocates an IP address / IPv6 prefix to the UE,
6. When the non 3gpp access has allocated an IP address / IPv6 prefix to the UE, and if the HPLMN has requested AAA notification signaling in the authorization data of this UE, the BNG generates such AAA notification signaling per 29.061 § 16.
   This takes the form of a Radius Accounting Start message per 29.061 § 16 that may e.g. contain
   ■ NAS-IP-Address, NAS-IPv6-Address = the BNG IP address, for communication with the AAA server in the HPLMN terminating the AAA notification signaling from the BNG.
   ■ Framed-IP-Address and/or Framed-IPv6-Prefix (IPv6 allocated to the UE) or Delegated-IPv6-Prefix (IPv6 Prefix delegated to the UE), etc..., as information on the IPv4 address and/or the (set of) IPv6 prefix(es) allocated by the non 3gpp access
   ■ Framed-Protocol=7,
   ■ Called-Station-Id = virtual APN for NSWO, as received from the 3gpp AAA server in the UE authorization data
   ■ Calling-Station-Id = MSISDN or any service level identifier of the UE such as the External UE identifier being defined for Machine Type Communications, as received from the 3gpp AAA server in the UE authorization data
   ■ Acct-Status-Type = Start,
   ■ Acct-Session-Id = session-Id generated by the BNG,
   ■ 3GPP Vendor-Specific/3GPP-IMSI, as received from the 3gpp AAA server in the UE authorization data
   ■ and possibly other parameters such as 3GPP Vendor-Specific/3GPP-IMSI-MCC-MNC
   This message is sent to the domain specified by the 3gpp AAA server in the UE authorization data. The service proxy in the HPLMN stores in a local database the relationship between the User identification and the IP address / Prefix(es) allocated the UE of this user
7. When later on the UE sends IP traffic towards its HPLMN service platform, the BNG enforces the filtering rules received in the UE authorization data and e.g. forwards the IP traffic in the IP tunnel specified in the UE authorization data
8. When the service proxy receives the IP flow from the UE, based on a look-up of its local database, the service proxy retrieves the identity of the UE associated with the source IP address of the received packet., and adds this identity in a relevant (HTTP) header of the service flow.
9. When the association between the UE and the IP address / IPv6 prefix is released, the trusted non 3gpp access (e.g. BNG) sends a notification (e.g. Radius Accounting stop) to the service proxy of the HPLMN. The service proxy of the HPLMN cleans the record associated with the UE in its local database.

Other embodiments relate to the case when the RGW (Residential Gateway) or a WLAN AP (Access Point) or AC (Access concentrator) allocates an individual IP addresses /IPv6 prefixes to the UE. In an embodiment, the sequence above is modified as follows:
An intermediate step is added between steps 5 and 6, where the entity that has allocated an IP addess/IPv6 prefix to the UE (RGW, AP, AC,..) notifies the BNG with such allocation. The BNG then stores this information in its tables and proceeds to sending the AAA notification as described in step 6.

Such solution has to be modified when NAPT applies i.e. when multiple UE may share the
same IPv4 address. In this case it assumed that the NAPT function is managed in order to allocate a source port range to an UE (all IP traffic of an UE corresponds to an unique IPv4 address and to a source port number within a pre-defined range).

In an embodiment, the pre-defined source port number range allocated by the Trusted non 3gpp access to the 3gpp UE is provided also in the AAA notification (e.g. Radius Accounting Start) sent by the BNG towards the service proxy of the HPLMN . In this case the service proxy in the HPLMN needs to be adapted to take into account that a 3gpp UE is associated not only with an IPv4 address but also with a source port range.

Embodiments of the present invention are also applicable in the case of usage of other access technologies than WLAN: it can e.g. apply to the case where the connection of the terminal to a Wireline access is via
○ other non 3gpp radio technologies such as Wimax
○ Wireline technologies such as Ethernet
○ 3gpp radio e.g. in case of HNB/HeNB connected onto a BBF line : for example when SIPTO (Selective IP traffic Offload as defined in 3gpp TS 23.401) at the RAN applies and when a solution is used such as disclosed in European Patent Application No. 11290014.7 filed January 13, 2011, entitled "Arrangement for providing functions of a mobile IP-CAN Gateway and use of such arrangement for offloading traffic from said mobile IP-CAN", and filed by the Applicant of the present application. In this case a HPLMN service proxy may be used to authenticate user flows that have not crossed the EPC based on AAA notification containing user identification information sent by a BNG

In one aspect, there is provided a method for allowing access to services delivered by a service delivery platform in a 3GPP HPLMN, to an User Equipment UE connected over a trusted non-3GPP Access Network AN.

Various embodiments are provided, which can be used alone or in combination (according to various combinations):
In an embodiment, said method comprises:
   ■ allowing delivery of said services to said UE not involving a mobile Edge Router of a PLMN but using a HPLMN service proxy between said trusted non-3GPP AN and said service delivery platform,
   ■ an entity of said non-3GPP AN signalling user identification information to said HPLMN service proxy.

In an embodiment, allowing delivery of said services to said UE not involving a mobile Edge Router of a PLMN but using a HPLMN service proxy between said trusted non-3GPP AN and said service delivery platform comprises allowing delivery of said services to said UE using a direct path between said UE and said service delivery platform, via said trusted non-3GPP AN and a HPLMN service proxy between said trusted non-3GPP AN and said service delivery platform.

In an embodiment:
- user identification information signalled by an entity of said non-3GPP AN to said HPLMN service proxy includes an association between IP address information of said UE as allocated by said non-3GPP AN, and service level identifier information of said UE in said HPLMN.

In an embodiment, said method comprises:
- a 3GPP AAA server in said HPLMN signalling delivery information to an entity of said non-3GPP AN, wherein said delivery information includes information for said non-3GPP AN to be able to signal relevant user identification information to said HPLMN service proxy.

In an embodiment:
- delivery information signalled by a 3GPP AAA server in said HPLMN to an entity of said non-3GPP AN includes service level identifier information of said UE in said HPLMN.

In an embodiment:
- delivery information signalled by a 3GPP AAA server in said HPLMN to an entity of said non-3GPP AN includes forwarding information allowing said non- 3GPP AN entity to forward IP traffic targeting said service delivery platform via said HPLMN service proxy.

In an embodiment:
- delivery information signalled by a 3GPP AAA server in said HPLMN to an entity of said non-3GPP AN includes filtering rules information allowing said non-3GPP AN entity to identify IP traffic targeting said service delivery platform.

In an embodiment, said method comprises:
- an entity of said non-3GPP AN signalling user identification information to said HPLMN service proxy, when said UE has been successfully authenticated over said non-3GPP AN and IP address information has been allocated by said non- 3GPP AN to said UE.

In an embodiment, said method comprises:
- a 3GPP AAA server in said HPLMN signalling delivery information to an entity of said non- 3GPP AN, as part of authorization data sent once said UE has been successfully authenticated over said non- 3GPP AN.

In an embodiment, said method comprises:
- an entity of said non- 3GPP AN indicating to a 3GPP AAA server in said HPLMN, during authentication of said UE over said non-3GPP Access Network, whether said non-3GPP AN entity supports signalling of user identification information to said HPLMN service proxy.

In an embodiment, said method comprises:
- a 3GPP AAA server in said HPLMN taking a decision whether said non-3GPP AN can be trusted, taking into account whether said non- 3GPP AN has indicated it supports signalling of user identification information to said HPLMN service proxy.

In an embodiment, said method comprises:
- an entity of said non-3GPP AN issuing AAA accounting signalling containing user identification information towards said HPLMN service proxy.

In an embodiment, said method comprises:
- an entity of said non-3GPP AN sending an AAA Accounting Start message towards said HPLMN service proxy, containing user identification information, when said non-3GPP AN has allocated IP address information to said UE.

In an embodiment, said method comprises:
- an entity of said non-3GPP AN sending an AAA Accounting Stop message towards said HPLMN service proxy, containing user identification information, when an association between said UE and IP address information allocated to said UE is released.

In an embodiment:
- delivery information signalled by a 3GPP AAA server in said HPLMN to an entity of said non-3GPP AN includes addressing information allowing said non-3GPP AN entity to send AAA accounting signalling towards said HPLMN service proxy.

Other aspects relate to entities comprising means for performing such method, said entities including, in particular, HPLMN service proxy, 3GPP AAA server, and entity of non-3GPP Access Network (such as in particular Broadband Network Gateway BNG of a BBF Access Network).

In one aspect, there is provided an entity of a non-3GPP Access Network AN, such as in particular Broadband Network Gateway BNG of a BBF Access Network, comprising means for allowing access to services delivered by a service delivery platform in a 3GPP HPLMN to an User Equipment UE connected over said non-3GPP AN corresponding to a trusted non-3GPP AN, allowing delivery of said services to said UE not involving a mobile Edge Router of a PLMN but using a HPLMN service proxy between said trusted non-3GPP AN and said service delivery platform.

Various embodiments are provided, which can be used alone or in combination (according to various combinations):
In an embodiment, said entity of a non-3GPP AN comprises:
   - means for signalling user identification information to said HPLMN service proxy.
In an embodiment:
   - user identification information signalled by said entity of a non-3GPP AN to said HPLMN service proxy includes an association between IP address information of said UE as allocated by said non-3GPP AN, and service level identifier information of said UE in said HPLMN.
In an embodiment, said entity of a non-3GPP AN comprises:
   - means for signalling user identification information to said HPLMN service proxy, when said UE has been successfully authenticated over said non-3GPP AN and IP address information has been allocated by said non- 3GPP AN to said UE.
In an embodiment, said entity of a non-3GPP AN comprises:
   - means for indicating to a 3GPP AAA server in said HPLMN, during authentication of said UE over said non-3GPP Access Network, whether said non-3GPP AN entity supports signalling of user identification information to said HPLMN service proxy.
In an embodiment, said entity of a non-3GPP AN comprises:
   - means for issuing AAA accounting signalling containing user identification information towards said HPLMN service proxy.
In an embodiment, said entity of a non-3GPP AN comprises:
   - means for sending an AAA Accounting Start message towards said HPLMN service proxy, containing user identification information, when said non-3GPP AN has allocated IP address information to said UE.
In an embodiment, said entity of a non-3GPP AN comprises:
   - means for sending an AAA Accounting Stop message towards said HPLMN service proxy, containing user identification information, when an association between said UE and IP address information allocated to said UE is released.

In another aspect, there is provided a 3GPP AAA server, comprising means for allowing access to services delivered by a service delivery platform in a 3GPP HPLMN to an User Equipment UE connected over a trusted non-3GPP Access Network Access Network AN, allowing delivery of said services to said UE not involving a mobile Edge Router of a PLMN but using a HPLMN service proxy between said trusted non-3GPP AN and said service delivery platform.

Various embodiments are provided, which can be used alone or in combination (according to various combinations):
In an embodiment, said 3GPP AAA server comprises:
   - means for signalling delivery information to an entity of said non-3GPP AN, wherein said delivery information includes information for said non-3GPP AN to be able to signal user identification information to said HPLMN service proxy.

In an embodiment:
- delivery information signalled by said 3GPP AAA server in said HPLMN to an entity of said non-3GPP AN includes service level identifier information of said UE in said HPLMN.

In an embodiment:
- delivery information signalled by said 3GPP AAA server in said HPLMN to an entity of said non-3GPP AN includes forwarding information allowing said non-3GPP AN entity to forward IP traffic targeting said service delivery platform via said HPLMN service proxy.

In an embodiment:
- delivery information signalled by said 3GPP AAA server in said HPLMN to an entity of said non-3GPP AN includes filtering rules information allowing said non-3GPP AN entity to identify IP traffic targeting said service delivery platform.

In an embodiment, said 3GPP AAA server comprises:
- means for taking a decision whether said non- 3GPP AN can be trusted, taking into account whether said non- 3GPP AN has indicated it supports signalling of user identification information to said HPLMN service proxy.

In another aspect, there is provided a HPLMN service proxy, comprising means for allowing access to services delivered by a service delivery platform in a 3GPP HPLMN to an User Equipment UE connected over a trusted non-3GPP Access Network AN, allowing delivery of said services to said UE not involving a mobile Edge Router of a PLMN but using said HPLMN service proxy between said trusted non-3GPP AN and said service delivery platform.

Various embodiments are provided, which can be used alone or in combination (according to various combinations):
In an embodiment, said HPLMN service proxy comprises:
   - means for receiving user identification information signalled to said HPLMN service proxy by an entity of said non-3GPP AN.
In an embodiment:
   - user identification information signalled by an entity of said non-3GPP AN to said HPLMN service proxy includes an association between IP address information of said UE as allocated by said non-3GPP AN, and service level identifier information of said UE in said HPLMN.
In an embodiment, said HPLMN proxy comprises:
   - means for receiving user identification information signalled to said HPLMN service proxy by an entity of said non-3GPP AN, when said UE has been successfully authenticated over said non-3GPP AN and IP address information has been allocated by said non- 3GPP AN to said UE.
In an embodiment, said HPLMN proxy comprises:
   - means for receiving AAA accounting signalling containing user identification information, issued by an entity of said non-3GPP AN towards said HPLMN service proxy.
In an embodiment, said HPLMN proxy comprises:
   - means for receiving an AAA Accounting Start message containing user identification information, issued by an entity of said non-3GPP AN towards said HPLMN service proxy when said non-3GPP AN has allocated IP address information to said UE.
In an embodiment, said HPLMN proxy comprises:
   - means for receiving an AAA Accounting Stop message containing user identification information, issued by an entity of said non-3GPP AN towards said HPLMN service proxy when an association between said UE and IP address information allocated to said UE is released.

The detailed implementation of the above-mentioned means does not raise any special problem for a person skilled in the art, and therefore such means do not need to be more fully disclosed than has been made above, by their function, for a person skilled in the art.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for allowing access to services delivered by a service delivery platform in a 3GPP HPLMN, to an User Equipment UE connected over a trusted non-3GPP Access Network AN, said method comprising:
■ allowing delivery of said services to said UE not involving a mobile Edge Router of a PLMN but using a HPLMN service proxy between said trusted non-3GPP AN and said service delivery platform,
■ an entity of said non-3GPP AN signalling user identification information to said HPLMN service proxy.

2. A method according to claim 1, wherein:
- user identification information signalled by an entity of said non-3GPP AN to said HPLMN service proxy includes an association between IP address information of said UE as allocated by said non-3GPP AN, and service level identifier information of said UE in said HPLMN.

3. A method according to claim 1 or 2, comprising:
- a 3GPP AAA server in said HPLMN signalling delivery information to an entity of said non-3GPP AN, wherein said delivery information includes information for said non-3GPP AN to be able to signal user identification information to said HPLMN service proxy.

4. A method according to any of claims 1 to 3, wherein:
- delivery information signalled by a 3GPP AAA server in said HPLMN to an entity of said non-3GPP AN includes service level identifier information of said UE in said HPLMN.

5. A method according to any of claims 1 to 4, wherein:
- delivery information signalled by a 3GPP AAA server in said HPLMN to an entity of said non-3GPP AN includes forwarding information allowing said non- 3GPP AN entity to forward IP traffic targeting said service delivery platform via said HPLMN service proxy.

6. A method according to any of claims 1 to 5, wherein:
- delivery information signalled by a 3GPP AAA server in said HPLMN to an entity of said non-3GPP AN includes filtering rules information allowing said non-3GPP AN entity to identify IP traffic targeting said service delivery platform.

7. A method according to any of claims 1 to 6, comprising:
- an entity of said non-3GPP AN signalling user identification information to said HPLMN service proxy, when said UE has been successfully authenticated over said non-3GPP AN and IP address information has been allocated by said non- 3GPP AN to said UE.

8. A method according to any of claims 1 to 7, comprising:
- a 3GPP AAA server in said HPLMN signalling delivery information to an entity of said non- 3GPP AN, as part of authorization data sent once said UE has been successfully authenticated over said non- 3GPP AN.

9. A method according to any of claims 1 to 8, comprising:
- an entity of said non- 3GPP AN indicating to a 3GPP AAA server in said HPLMN, during authentication of said UE over said non-3GPP Access Network, whether said non-3GPP AN entity supports signalling of user identification information to said HPLMN service proxy.

10. A method according to any of claims 1 to 9, comprising:
- a 3GPP AAA server in said HPLMN taking a decision whether said non-3GPP AN can be trusted, taking into account whether said non- 3GPP AN has indicated it supports signalling of user identification information to said HPLMN service proxy.

11. A method according to any of claims 1 to 10, comprising:
- an entity of said non-3GPP AN issuing AAA accounting signalling containing user identification information towards said HPLMN service proxy.

12. A method according to any of claims 1 to 11, comprising:
- an entity of said non-3GPP AN sending an AAA Accounting Start message towards said HPLMN service proxy, containing user identification information, when said non-3GPP AN has allocated IP address information to said UE.

13. A method according to any of claims 1 to 12, comprising:
- an entity of said non-3GPP AN sending an AAA Accounting Stop message towards said HPLMN service proxy, containing user identification information, when an association between said UE and IP address information allocated to said UE is released.

14. A method according to any of claims 1 to 13, wherein:
- delivery information signalled by a 3GPP AAA server in said HPLMN to an entity of said non-3GPP AN includes addressing information allowing said non-3GPP AN entity to send AAA accounting signalling towards said HPLMN service proxy.

15. An entity of a non-3GPP Access Network AN, such as in particular Broadband Network Gateway BNG of a BBF Access Network, comprising, for allowing access to services delivered by a service delivery platform in a 3GPP HPLMN to an User Equipment UE connected over said non-3GPP AN corresponding to a trusted non-3GPP AN, allowing delivery of said services to said UE not involving a mobile Edge Router of a PLMN but using a HPLMN service proxy between said trusted non-3GPP AN and said service delivery platform:
- means for signalling user identification information to said HPLMN service proxy.

16. An entity of a non-3GPP AN according to claim 15, wherein:
- user identification information signalled by said entity of a non-3GPP AN to said HPLMN service proxy includes an association between IP address information of said UE as allocated by said non-3GPP AN, and service level identifier information of said UE in said HPLMN.

17. An entity of a non-3GPP AN according to claim 15 or 16, comprising:
- means for signalling user identification information to said HPLMN service proxy, when said UE has been successfully authenticated over said non-3GPP AN and IP address information has been allocated by said non- 3GPP AN to said UE.

18. An entity of a non-3GPP AN according to any of claims 15 to 17, comprising:
- means for indicating to a 3GPP AAA server in said HPLMN, during authentication of said UE over said non-3GPP Access Network, whether said non-3GPP AN entity supports signalling of user identification information to said HPLMN service proxy.

19. An entity of a non-3GPP AN according to any of claims 15 to 18, comprising:
- means for issuing AAA accounting signalling containing user identification information towards said HPLMN service proxy.

20. An entity of a non-3GPP AN according to any of claims 15 to 19, comprising:
- means for sending an AAA Accounting Start message towards said HPLMN service proxy, containing user identification information, when said non-3GPP AN has allocated IP address information to said UE.

21. An entity of a non-3GPP AN according to any of claims 15 to 20, comprising:
- means for sending an AAA Accounting Stop message towards said HPLMN service proxy, containing user identification information, when an association between said UE and IP address information allocated to said UE is released.

22. A 3GPP AAA server, comprising, for allowing access to services delivered by a service delivery platform in a 3GPP HPLMN to an User Equipment UE connected over a trusted non-3GPP Access Network Access Network AN, allowing delivery of said services to said UE not involving a mobile Edge Router of a PLMN but using a HPLMN service proxy between said trusted non-3GPP AN and said service delivery platform:
- means for signalling delivery information to an entity of said non-3GPP AN, wherein said delivery information includes information for said non-3GPP AN to be able to signal user identification information to said HPLMN service proxy.

23. A 3GPP AAA server according to claim 22, wherein:
- delivery information signalled by said 3GPP AAA server in said HPLMN to an entity of said non-3GPP AN includes service level identifier information of said UE in said HPLMN.

24. A 3GPP AAA server according to claim 22 or 23, wherein:
- delivery information signalled by said 3GPP AAA server in said HPLMN to an entity of said non-3GPP AN includes forwarding information allowing said non-3GPP AN entity to forward IP traffic targeting said service delivery platform via said HPLMN service proxy.

25. A 3GPP AAA server according to any of claims 22 to 24, wherein:
- delivery information signalled by said 3GPP AAA server in said HPLMN to an entity of said non-3GPP AN includes filtering rules information allowing said non-3GPP AN entity to identify IP traffic targeting said service delivery platform.

26. A 3GPP AAA server according to any of claims 22 to 25, comprising:
- means for taking a decision whether said non- 3GPP AN can be trusted, taking into account whether said non- 3GPP AN has indicated it supports signalling of user identification information to said HPLMN service proxy.
